(19) Europäisches Patentamt
European Patent Office
Office européen des brevets

(11) **EP 1 905 554 B1**

(12) **EUROPEAN PATENT SPECIFICATION**

(45) Date of publication and mention
of the grant of the patent:
**10.11.2010 Bulletin 2010/45**

(51) Int Cl.:
***B26D 1/00*** *(2006.01)*   ***B26D 7/26*** *(2006.01)*
***B26D 7/10*** *(2006.01)*

(21) Application number: **07117230.8**

(22) Date of filing: **26.09.2007**

(54) **Knife cylinder, rotary cutter, and method of attaching knife mounting bracket**

Messerzylinder, Drehschneider und Verfahren zur Anbringung einer Messerhalterung

Cylindre porte-couteaux, gyrobroyeur et procédé pour fixer un support de montage de couteaux

(84) Designated Contracting States:
**DE IT**

(30) Priority: **27.09.2006 JP 2006262355**

(43) Date of publication of application:
**02.04.2008 Bulletin 2008/14**

(73) Proprietor: **Mitsubishi Heavy Industries Printing & Packaging Machinery, Ltd.
Mihara-shi
Hiroshima 729-0393 (JP)**

(72) Inventors:
• **Ishibuchi, Hiroshi
Mitsubishi Heavy Ind., Ltd.
Hiroshima-shi, Hiroshima (JP)**

• **Kawasetsu, Nozomu
Mitsubishi Heavy Ind., Ltd.
Nagasaki-shi, Nagasaki (JP)**
• **Yoshiya, Akihiko
Mitsubishi Chemical Functional Prod., Inc.
Tokyo (JP)**

(74) Representative: **Bongiovanni, Simone et al
STUDIO TORTA
Via Viotti 9
10121 Torino (IT)**

(56) References cited:
**EP-A- 0 363 887        EP-A- 0 960 702
WO-A-01/28780          DE-A1- 19 726 993
FR-A- 2 536 131        FR-A- 2 550 174
JP-A- 63 139 733       JP-A- 2002 254 388
JP-A- 2002 284 430     US-A- 6 065 382**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

**Field of the Invention**

The present invention relates to a rotary cutter for cutting a corrugated cardboard sheet in a corrugated cardboard sheet manufacturing equipment, particularly to a knife cylinder of high rigidity and low inertia composing the rotary cutter.

**Description of the Related Art**

Upstream of a production line of a corrugated cardboard sheet manufacturing equipment is generally comprised of a mill-roll stand for feeding base paper for making a corrugated cardboard such as a liner sheet and core sheet, a splicer for connecting the sheets to be fed continuously, a single facer for producing a single-faced corrugated cardboard sheet by forming the core sheet into waved shape and gluing onto the liner sheet, and a double facer for producing a double-faced corrugated cardboard sheet by gluing a back liner onto the apices of the corrugated medium of the single-faced corrugated cardboard sheet.

Downstream from the double facer is provided a slit-scorer and a cutoff device (rotary cutter) for severing the doubled-faced corrugated cardboard sheet, and downstream from the rotary cutter is provided a defective sheet removal equipment for removing defective sheets developed in the corrugated cardboard sheet manufacturing process.

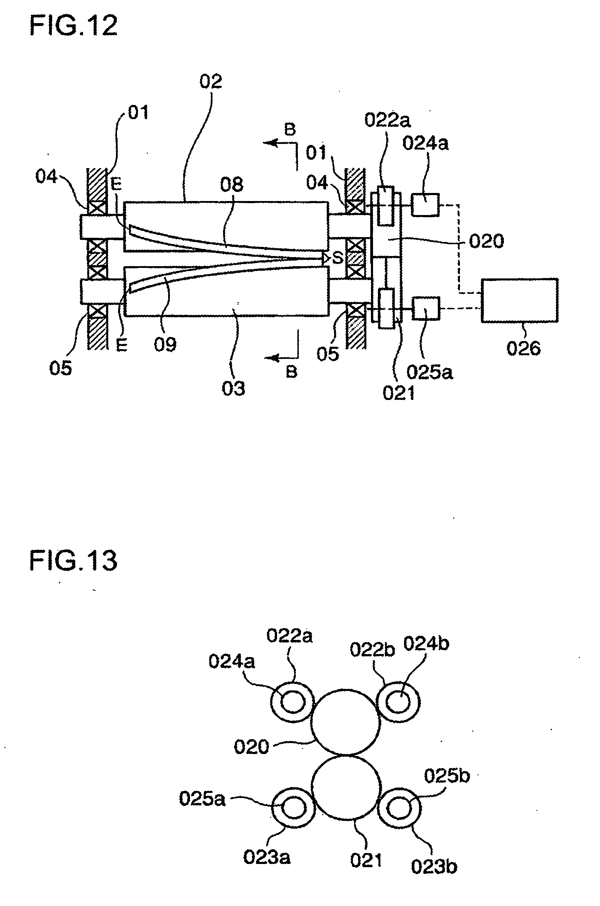

In Japanese Laid-Open Patent application No.2002-284430 (patent literature 1) is disclosed a cutoff device of corrugated cardboard sheet. FIGS.12, 13, and 14 show a elevation view, a right side view, and a cross sectional view along B-B line shown in Fig. 12 respectively of the cutoff device. In FIGS.12-14, an upper knife cylinder 02 and a lower knife cylinder 03 are supported for rotation by a left and right frames 01 via an upper bearing 04 and a lower bearing 05. An upper knife 08 and a lower knife 09 are attached helically to the upper knife cylinder and lower knife cylinder respectively. A corrugated cardboard sheet D is severed by the engagement of the upper and lower knives.

An upper main gear 020 is attached to the right side shaft end of the upper knife cylinder 02, and a lower main gear 021 which engages with the upper main gear 020 is attached to the right side shaft end of the lower knife cylinder 03. The lower main gear 021 is formed into a split gear in order to eliminate backlash in the engagement with the upper main gear 020.

Lower pinion gears 023a and 023b are provided to engage with the lower main gear 021, and subsidiary drive motor 025a and 025b are connected to the lower pinion gears 023a and 023b respectively. Upper pinion gears 022a and 022b are provided to engage with the upper main gear 020, and main drive motor 024a and 024b are connected to the upper gears 022a and 022b respectively. These drive motors 024a, 024b, 025a, and 025b are controlled by a controller 026.

The upper and lower knives 08 and 09 are attached to the upper and lower knife cylinders helically respectively, and engagement of the upper knife 08 with the lower knife 09 begins at an end (at the right side end S in FIG.12, this is referred to as the starting end), advances toward the other end(at the left side end E in FIG.12, this is referred to as the finishing end). In this way, the corrugated cardboard sheet D is sheared starting from the starting end S to end at the finishing end E while the sheet is continuously advanced.

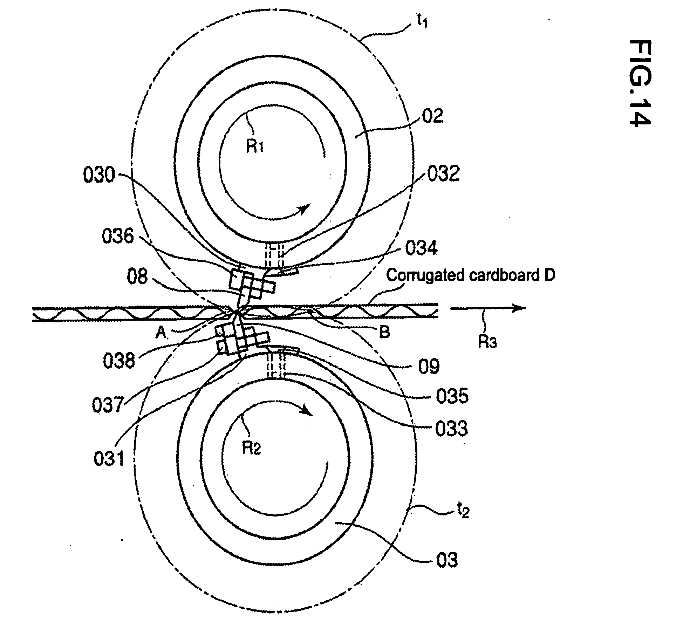

FIG.14 is a drawing to explain the state of the corrugated card board D is cut by the engagement of the upper knife 08 with the lower knife 09. Referring to FIG.14, an upper and lower knife mounting brackets 030 and 031 are attached respectively to the outer periphery of each of the upper and lower knife cylinders 02 and 03 by fixing bolts 034 and 035 screwed into metal inserts 032 and 033 of the upper and lower knife cylinders 02 and 03 respectively.

The upper and lower knives 08 and 09 are fixed to the upper and lower knife mounting brackets 030 and 031 by means of bolts 036 and 037 respectively. A circle t1 indicates a trajectory of the upper knife 08 and a circle t2 indicates a trajectory of the lower knife 09.

The corrugated cardboard sheet D advances in the direction indicated by an arrow R3, the upper and lower knife cylinders 02 and 03 rotate in directions indicated by arrows R1 and R2 respectively. Cutting of the cardboard D starts at a starting point A where the upper and lower knives start engaging and ends at an end point B where the engagement of the upper and lower knives ends.

When the corrugated cardboard sheet D is cut by the engagement of the knives, force exerts on each of the knives. Each of the knives 08 and 09 is warped due to the force in counter direction each other and a gap develops between the cutting edges of the knives. Smooth cutting of the cardboard D can not be performed with increased gap between the cutting edges, so preload is applied to the knives to press each other with a certain force in order to evade developing of the gap.

Conventionally, the preload was applied to the lower knife 09 by a preloading bolt 038 screwed into the knife mounting bracket 31 of the lower knife cylinder 09. By pressing the lower knife 09 toward the upper knife 08 by means of the preloading screw 038, both the knives are deflected toward opposite direction each other and preload is applied to both the knives. The preloading bolt 038 may be provided to the upper knife cylinder 02.

However, in this case, it was necessary to provide upper and lower main gears in the finishing end E side of the knife cylinders so that the knife cylinders are supported at both end sides in order to prevent development a gap between the knife edges of both knives. Further, it was necessary to increase rigidity of the knife cylinders in order to prevent occurrence of deflation or distortion of the knife cylinders when cutting of the cardboard is performed.

To deal with this problem, according to the cutoff device of the patent literature 1, tooth planes of the lower main gear 021 are shaved off in a meshing range of the upper and lower main gears in a range the upper and lower knives 08 and 09 engage with each other so that a gap is formed between tooth faces of the upper and lower main gear in said meshing range, thereby the relative rotation phase of the upper and lower cylinders can change so that the upper and lower knives get close to each other.

The lower drive motors 025a and 025b are controlled by the controller 026 such that these motors are driven by the upper drive motors 024a and 024b respectively or rotated in synchronization with the upper drive motors 024a and 024b in a range the upper and lower knives 08 and 09 are not engaged with each other. In a range the upper and lower knives are engaged with each other, the lower drive motors 025a and 025b are torque-controlled by the controller 026 so that the lower knife 09 is pressed against the upper knife 08.

By controlling the drive motors of the knife cylinders in this way, both the knives press against each other, and adjustment of the pressing force can be easily done. Therefore, knife cylinders of reduced rigidity can be adopted and one of main gear trains can be omitted, so the drive motors of the knife cylinders can be reduced in capacity.

However, reduction of cost and improvement of production efficiency in corrugated cardboard sheet manufacture are demanded more than ever in recent years, and the need for further increasing cutting speed of corrugated cardboard sheet while maintaining cutting accuracy of the cutoff device(rotary cutter), meeting increased width of the cardboard, and on the other hand decreasing the capacity of the drive motors, is rising.

To cope with increased rotation speed and width of knife cylinder, it is necessary to further increase flexural and torsional rigidity of the knife cylinder in one hand and to reduce rotatory inetia thereof on the other hand.

In Japanese UtilityModel No.2527288 (patent literature 2) is a rotary cutter of which the knife cylinder is composed of a core member of steel material and an outer member of carbon fiber material surrounding the core member, thereby reducing rotatory inertia of the knife cylinder without reducing flexural and torsional rigidity thereof.

In Japanese Laid-Open Patent Application No.2002-254383 (patent literature 3) is disclosed a roller of a slitter with sleeves having peripheral grooves for slitting roll-paper or -film sheet along feeding direction of the sheet into a plurality of strips of predetermined width, with which the width of the sheet to be slit can be increased, high speed rotation of the roller is made possible, and a large number of strip product can be produced.

The roller comprises a hollow cylinder and said sleeves fit to the outer circumference of the hollow cylinder. The roller is rotated with upper knife edges inserted into the peripheral grooves of the sleeves, and the sheet to be slit is fed to be advanced by the rotation of the roller between the upper knife edges and the sleeves fit to the roller to be cut by the knife edges. The hollow cylinder is made of carbon fiber reinforced plastic(CFRP) and each of the sleeves is made as a double tube consisting of an inner tube made of CFRP and an outer tube made of stainless steel having the peripheral grooves. In this way the roller of light weight and high flexural and torsional rigidity is obtained.

However, the knife cylinder disclosed in the patent literature 2, rotatory inertia of the knife cylinder is not reduced enough because the core member is made of steel material. Further, the patent literature 2 discloses only an idea of covering the core member with the outer member made of material using carbon fiber.

The patent literature 3 discloses only an idea of using CFRP for the hollow cylinder and inner tube of the sleeve, and a knife cylinder of high flexural and torsional rigidity and low rotatory inertia capable of meeting requirements of present days can not be obtained by applying the idea.

In a rotary cutter, temperature of the knife cylinder itself increases due to heat transfer from the drive motor and the knife cut high temperature cardboard sheet and due to high temperature of the atmosphere surrounding the rotary cutter. As a result, surface temperature of the knife cylinder reaches about 60°C.

Coefficient of thermal expansion of stainless steel is $16.6 \times 10^{-6}(/°C)$, that of pitch type CFRP is $0.7 \times 10^{-6}(/°C)$, thus heat expansion coefficient of stainless steel is about 24 times larger than CFRP.

Axial length of the knife cylinder is generally 1400mm~2800mm. Therefore, when CFRP is adopted as material of the knife cylinder, axial expansion of the knife mounting bracket with the knife attached thereto is larger than that of the knife cylinder, as a result, the knife cylinder bends like a banana with the side to which the knife mounting bracket is not attached inside, and straight cutting in the widthwise direction can not be attained.

Further, the rotary cutter experiences a variety of vibrating force, and when the knife cylinder vibrates, the vibration have an affect on the preload applied to the knives, This makes it difficult to maintain proper preload of the knives. To increase the rigidity of the knife cylinder in order to reduce vibration amplitude causes increase in rotatory inertia in a case of knife cylinder made of metal, i.e. $GD^2$ (G is weight of the body of rotation, and D is the diameter of the body of rotation) increases, resulting in increased capacity of the drive motor for controlling the rotary cutter which accompanies acceleration and deceleration of the knife cylinder.

DE 197 26 993 A1 discloses a knife cylinder having the features of the preamble of claim 1.

## SUMMARY OF THE INVENTION

The present invention was made in light of problems of the conventional art, and an object is to provide a knife cylinder of a rotary cutter which can accommodate to increased cutting speed and width of a corrugated cardboard sheet in recent years and which is low in weight and rotatory inertia and has enough tensile strength, flexural and torsional rigidity. Another object of the invention is to obtain a knife cylinder which is prevented from suffering damage or attrition caused by excessive force exerting to the knife cylinder when jamming up of sheet occurs or when the sheet contacts the knife cylinder.

A further object of the invention is to prevent flexural deformation of the knife cylinder in increased temperature, to preventing vibration thereof, and to realize firm and easy attachment of a knife mounting bracket to the outer periphery of a knife cylinder body made of CFRP material. To attain the objects, the knife cylinder of the invention, which is defined in claim 1, proposes a knife cylinder with a knife attached helically on the outer periphery thereof, wherein a hollow cylindrical body of the knife cylinder consists of layers of carbon fiber reinforced plastic and the cylinder body has tensile elastic modulus of 206 GPa or higher in axial direction thereof.

By composing the knife cylinder body of CFRP layers lower in specific gravity than that of metal and having tensile elastic modulus of 206 GPa or higher, preferably 220 GPa or higher in axial direction thereof, a knife cylinder having high flexural and torsional rigidity can be obtained. Therefore, the knife cylinder can be made thin-walled, and as CFRP is low in specific gravity, a knife cylinder of extremely low rotatory inertia can be obtained by synergy effect of thin-wall and low specific gravity.

The CFRP layers can be formed in such a way that a plurality of prepreg sheets which is made by impregnating carbon fibers arranged to extend in a direction uniformly with resin(the resin in the prepreg sheet is yet to be hardened and surface friction coefficient is high) are laminated and then heat-hardened.

When fibers in CFRP are arranged to extend inclined to axial direction of the cylinder, tensile elastic modulus in the axial direction decreases as the inclination angle increases. Therefore, in order to attain 206 GPa or higher tensile elastic modulus, 70% in volume or larger of carbon fibers having tensile elastic modulus of 590 GPa or higher are arranged in axial direction.

The upper limit of fiber density of carbon fibers in CFRP layer is usually about 60%. When proportion in volume of carbon fibers arranged in axial direction of the cylinder is 70% or larger and tensile elastic modulus of the carbon fibers is 590 GPa or higher, a knife cylinder body of tensile elastic modulus of 206 GPa or higher can be obtained as recognized from the flowing calculating formula (1).

$$\text{Safety factor } 0.9 \times \text{tensile elastic modulus of CFRP layers } 590\, \text{GPa} \times \text{density of carbon fibers in the CFRP layers } 0.56 \times \text{proportion in volume of carbon fibers arranged to extend in axial direction of the cylinder } 0.7 = 208\, \text{Gpa} \quad \cdots (1)$$

Since proportion in volume of carbon fibers arranged to extend in axial direction of the cylinder is 70% or larger, and if 80% or larger in volume of carbon fibers are of pitch type CFRP, a knife cylinder having tensile elastic modulus in axial direction thereof higher than that of steel can be obtained even if the rest of carbon fibers are of PAN type CFRP. Tensile elastic modulus of pitch type CFRP is 640 Gpa and that of PAN type CFRP is 230 GPa, so when 80% or larger in volume of carbon fibers are of pitch type CFRP and the rest of carbon fibers are of PAN type CFRP, the sum of the tensile elastic moduli of the pitch type and PAN type CFRP exceeds 206 GPa, and a knife cylinder having tensile elastic modulus in axial direction higher than that of steel can be obtained as recognized from the following calculating formulas (2) and (3).

Safety factor 0.9×tensile elastic modulus of pitch type CFRP layers 640 GPa×density of carbon fibers in the CFRP layers 0.6×proportion in volume of carbon fibers arranged to extend in axial direction of the cylinder 0.7 × proportion in volume of pitch type CFRP layers 0.8 = 208 Gpa ・・・(2)

Safety factor 0.9×tensile elastic modulus of PAN type CFRP layers 640 GPa×density of carbon fibers in the CFRP layers 0.6×proportion in volume of carbon fibers arranged to extend in axial direction of the cylinder 0.7 × proportion in volume of PAN type CFRP layers 0.2 = 17 Gpa ・・・(3)

In the invention, it is preferable that an innermost layer of the layers is a carbon fiber reinforced plastic layer with carbon fibers arranged to extend in circumferential direction of the cylinder body, and on the innermost layer are laminated a plurality of layers of carbon fiber reinforced plastic with carbon fibers arranged to extend in axial direction of the cylinder body, others arranged to extend in a range of inclination angle of +30° ~ +60° , and arranged in a range of inclination angle of -30° ~ -60° to axial direction of the cylinder body.

In this specification, axial direction of the cylinder is defined as fiber inclination angle of 0° and circumferential direction of the cylinder is defined as fiber inclination angle of 90° .

There are two methods of forming cylindrical CFRP layers, that is; a method in which carbon fibers are immersed in liquid resin, then the fibers are wound directly on a mandrel with a prescribed angle to form a plurality of layers by repeating the winding process, and then the layers are heat-hardened; and a method in which carbon fiber sheets with carbon fibers arranged in a uniform direction are prepared, the sheets are impregnated with resin to obtain prepreg sheets, the prepreg sheets are wound on a mandrel one by one to form layers, then the layers are heat-hardened. The knife cylinder body of laminated cylindrical CFRP layers of the invention is produced by the latter method.

The innermost cylindrical layer of the laminated CFRP layers is of a layer with carbon fibers arranged to extend in circumferential direction of the cylinder in the invention. By providing the innermost layer with carbon fibers extending in circumferential direction of the cylinder, a cylinder of high resistant property against compression load exerting radially inwardly from outer side layers can be obtained, therefore shape retaining property against such a compression load is increased.

On the innermost layer are laminated a plurality of sets of layers consisting of a CFRP layer each consisting of a CFRP layer with carbon fibers arranged to extend in axial direction of the cylinder and CFRP layers with carbon fibers arranged to extend in direction ± 30° ~ ± 60° respectively are laminated sequentially. As CFRP layers with carbon fibers arranged in directions other than circumferential direction(fiber inclination angle of 90° ) of the cylinder can not prevent radially inward contraction of resin impregnated in the fibers when decreased in temperature, a cylinder with the laminated layers closely contacting each other without clearance between them can be obtained due to the contraction.

The contraction is maximum when the inclination angle of carbon fibers is ±45° , and when the inclination angle of carbon fibers is in a range between ±30° ~ ± 60° , large contraction occurs. Therefore, by providing CFRP layers of carbon fiber inclination angle of this range, a cylinder with the laminated layers closely contacting each other without clearance between them can be obtained.

The knife cylinder is fitted at both ends thereof into supporting cylindrical members made of metal(usually steel) . When removing supporting members form the cylinder body, the supporting members can be drawn out easily by cooling the cylinder knife by virtue of the shape retaining property of the innermost layer and difference in thermal expansion coefficient between CFRP and metal.

That is, a clearance is developed between the inner periphery of the innermost layer and the outer periphery of the supporting members by cooling the knife cylinder. As the innermost layer has carbon fibers extending in circumferential direction of the cylinder, the carbon fibers resist compression load caused by the contraction of the layers laminated thereon and function to prevent the resin impregnated in the fibers from contracting inwardly. Further, an enough clearance is developed between the innermost layer and the supporting members owing to low thermal expansion coefficient of CFRP and higher thermal expansion coefficient of metal, so the supporting members can be easily drawn out from the knife cylinder.

When removing the cylinder body of the knife cylinder of the invention form the mandrel for forming the cylinder body, the cylinder body can be removed easily by virtue of difference in thermal expansion coefficient between CFRP and metal of which the mandrel is made.

Further, by adopting preferably PAN type CFRP which is higher in compression strength than pitch type CFRP for the innermost layer, resistance to the compression load can be increased.

By laminating CFRP layer with carbon fibers arranged in a range between $\pm 30° \sim \pm 60°$ of inclination to axial direction of the cylinder on the innermost layer, torsional rigidity of the cylinder can be increased.

By laminating CFRP layers so that tensile elastic modulus of the cylinder in axial direction thereof is 206 GPa or higher, a cylinder of high tensile strength high flexural rigidity can be obtained.

As has been described, by composing the cylinder body with the innermost CFRP layer with carbon fibers arranged to extend in circumferential direction of the cylinder body and outer CFRP layers with carbon fibers arranged to extend in directions inclined by $\pm 30° \sim \pm 60°$ to axial direction of the cylinder body, good shape retaining property against compression load, tensile strength and flexural rigidity higher the steel, firmly united CFRP layers, and high torsional rigidity can be attained.

Further, by laminating CFRP layers having carbon fibers extending in different directions, friction between the layers is increased, occurrence of slip between the layers is prevented, and close contact between the layers can be improved.

By forming the cylinder body of CFRP layers of fiber density of 50% or larger in volume and determining fiber inclination angles and proportion in volume of pitch type CFRP so that tensile elastic modulus in axial direction of the cylinder body is 206 GPa or higher, flexural rigidity higher than steel can be attained and at the same time high torsional rigidity can be obtained. Therefore, by adopting the knife cylinder of the invention, one of the drive gear trains of the conventional rotary cutter can be eliminated as is in the rotary cutter of the patent literature 1 shown in FIG.12.

In the invention, it is preferable that a plurality of sets of layers each consisting of a first layer of carbon fiber reinforced plastic with carbon fibers arranged to extend in axial direction of the cylinder body, a second layer of carbon fiber reinforced plastic with carbon fibers arranged to extend in a range of inclination angle of +30° ~ +60° to axial direction of the cylinder body, and a third layer of carbon fiber reinforced plastic with carbon fibers arranged in a range of inclination angle of -30° ~ -60° to axial direction of the cylinder body, are sequentially laminated on the innermost layer. By composing like this, a knife cylinder having high flexural rigidity and high torsional rigidity in both rotation directions can be obtained and at the same time the knife production of knife cylinders becomes easy.

That is, the laminated cylinder body can be easily produced by preparing beforehand a plurality of laminated sets of a plurality of prepreg sheets having carbon fiber inclination angles corresponding to the first to third CFRP layers and impregnated with resin and laminating the laminated sets of prepreg sheets on the innermost layer.

It is preferable that the inclination angle of the second CFRP layer is symmetrical to that of the third CFRP layer about axial direction of the cylinder body so that torsional rigidity of the cylinder body is the same in both twist direction.

It is preferable to cover the outer periphery of the knife cylinder consisting of CFFRP layers by a lining layer. The lining layer protects the CFRP layers of the knife cylinder when excessive force exerts on the periphery of the knife cylinder due to jamming up of the corrugated cardboard sheet or when the cardboard sheet contact the knife cylinder and attrition of the outer surface of the knife cylinder is feared.

It is suitable to adopt rubber or glass fiber reinforced plastic as material of the lining layer. Rubber lining layer is cheap and relatively easily formed into the lining layer, and CFRP lining is conspicuous in protecting CFRP layers of the cylinder.

The rotary cutter of the invention comprises a pair of knife cylinders each having a knife attached helically to the outer periphery thereof for cutting a strip of cardboard sheet advancing between the knife cylinders, wherein a hollow cylindrical body of the knife cylinder is composed of laminated layers of carbon fiber reinforced plastic and tensile elastic modulus thereof is 206 GPa or higher in axial direction thereof, bosses made of metal are attached to both ends of the cylinder body, each of the bosses has a cylindrical part to be fit into the hollow of the cylindrical body, a flange part to be brought into close contact with an end face of the cylindrical body, and a shaft part protruding from the flange part, whereby the bosses made of metal are fixed to the cylinder body by fitting the hollow cylindrical part of each of the bosses into the hollow of the cylinder body from both ends thereof for the cylinder body to be supported for rotation.

In the rotary cutter of the invention, the supporting bosses are fixed to the knife cylinder body composed of laminated CFRP layers which is light in weight and high in flexural and torsional rigidity by fitting the cylindrical part of each of the supporting bosses into the hollow of the knife cylinder body so that the cylinder body can be supported for rotation. in this way, increase in weight and rotatory inertia of the knife cylinder is evaded, thereby enabling reducing the capacity of the knife cylinder drive motors increasing of cutting speed of cardboard sheet.

Further, as the innermost layer is composed of a CFRP layer with carbon fibers arranged to extend in circumferential direction of the cylinder body, the supporting bosses can be easily removed from the cylinder body when disassembling the knife cylinder by cooling the knife cylinder because of the development of a clearance between the innermost CFRP layer of high compression rigidity and the supporting bosses made of metal due to thermal expansion coefficient between CFRP and metal, as mentioned previously.

It is preferable that a knife mounting bracket is attached helically to the outer periphery of the cylinder body and a knife is mounted to the bracket, and a counter flection member having thermal expansion coefficient the same to that of the knife mounting bracket is attached to the cylinder body on the outer periphery or inner periphery thereof so that the counter flection member is positioned symmetrically to the knife mounting bracket about the center axis of the cylinder body.

With this composition, occurrence of bending of the knife cylinder in increased temperature due to difference in thermal expansion coefficient between the knife mounting bracket made of metal such as stainless steel and CFRP, can be prevented.

Temperature of the knife cylinder increases as cutting speed of the corrugated cardboard sheet is increased due to increased heat transfer from the drive motors and knife cutting the sheet of increased temperature, and due to the effect of atmosphere of high temperature. Temperature of the knife cylinder reaches 60°C. Thermal expansion coefficient of stainless steel is $16.6 \times 10^{-6}(/°C)$, that of pitch type CFRP is $0.7 \times 10^{-6}(/°C)$, thus heat expansion coefficient of stainless steel is about 24 times larger than CFRP.

Therefore, when the knife cylinder body is composed of CFRP layers and the knife mounting bracket with the knife made of steel is attached on the outer periphery of the CFRP layers, axial expansion of the knife mounting bracket with the knife attached thereto is larger than that of the knife cylinder, as a result, the knife cylinder bends like a banana with the side to which the knife mounting bracket is not attached inside, and straight cutting in the widthwise direction can not be attained.

According to the invention, by composing the knife cylinder as mentioned above, thermal expansion of the knife mounting bracket with the knife attached thereto and thermal expansion of the counter flection member cancel out each other, and occurrence of bending of the knife cylinder in increased temperature is completely eliminated.

By this, development of a clearance between the knife edges of the upper and lower knives of the upper and lower knife cylinders is prevented, and the sheet can be cut cleanly and accurately.

Result of an experiment showed that a knife mounting bracket with a knife attached thereto is mounted on the outer periphery of CFRP layers of a knife cylinder body of axial length of 3000mm, a flection of 0.5mm occurred at the center of the cylinder body when temperature is raised by 60°C from normal temperature. This is a flection not negligible and will affect cutting performance.

Further, by composing the counter flection member of a bracket attached to the knife cylinder body and a piece member attached detachably to the bracket, the piece member can be attached to the bracket as necessary to prevent occurrence of bending of the knife cylinder body due to increased temperature.

As the counter flection member is attached to the knife cylinder body on the outer periphery or inside periphery thereof at a position symmetrical to the knife mounting bracket about the center axis of the knife cylinder body, the counter flection member functions as a counter balance weight to reduce vibration of the knife cylinder.

By composing the counter flection member such that the counter flection piece member to be detachable, the piece member can be replaced by a piece member of different weight, so vibration of the knife cylinder can be effectively reduced by selecting the weight of the piece member in accordance with the natural vibration frequency of the knife cylinder.

It was clarified by the inventors of this invention that when one or more slits are formed to the knife mounting bracket at a certain spacing along longitudinal direction of the bracket, occurrence of flexural deformation of the knife cylinder in increased temperature can be halved. By composing the knife mounting bracket like this, flexural deformation of the knife cylinder can be halved by a simple measure, and occurrence of troubles in cutting operation of the cardboard sheet can be prevented.

Further, according to the invention, occurrence of flexural deformation of the knife cylinder can be prevented by providing a cooling means for cooling the knife cylinder. As a cooling means, it is suitable to form a plurality of cooling fins or cooling grooves on the outer periphery of the knife cylinder, or to introduce cooling air to the hollow of the knife cylinder. For example, it is suitable to provide a lining to cover the outer periphery of the CFRP layers of the knife cylinder and provide on the lining a plurality of aluminum fins running in circumferential direction of the cylinder at a certain spacing.

As a method of attaching the knife mounting bracket on the outer periphery of the CFRP layers of the knife cylinder, it is preferable to glue the knife mounting bracket on the outer periphery of the knife cylinder with a thermosetting resin type adhesive. As the thermosetting resin type adhesive can be used for example epoxy resin superior in adhesion properties. It is preferable to use an adhesive of shearing strength of 10 MPa or higher in the point of view of strength.

It is suitable to use tightening bolts to fix the knife mounting bracket on the outer periphery of the cylinder in addition to gluing with an adhesive for security of the attachment. Tightening by means of bolts is not necessary when enough shearing strength is secured by gluing with an adhesive, however, adhesive force is increased by tightening with bolts in addition.

The knife cylinder body composed of laminated layers of CFRP can be produced in a way as follows: Prepreg sheets each produced by arranging carbon fibers to extend in a direction uniformly and impregnating the fibers with resin are wound to the outer periphery of a mandrel sequentially to form cylindrical layers starting from the innermost layer under normal temperature (15~30 °C, preferably 18~25°C) with pressure applied to the prepreg sheets.

The knife cylinder body has a CFRP layer, preferably a PAN type CFRP layer with carbon fibers arranged to extend in circumferential direction of the cylinder as the innermost layer and layers with carbon fibers arranged to extend in direction inclined by +30° ~ +60° and -30° ~ -60° to axial direction of the cylinder laminated over the innermost layer. The laminated layers are heat-hardened and tensile elastic modulus of the cylinder becomes 206 GPa or higher.

Then the heat-hardened cylinder body of laminated layers is drawn out from the mandrel.

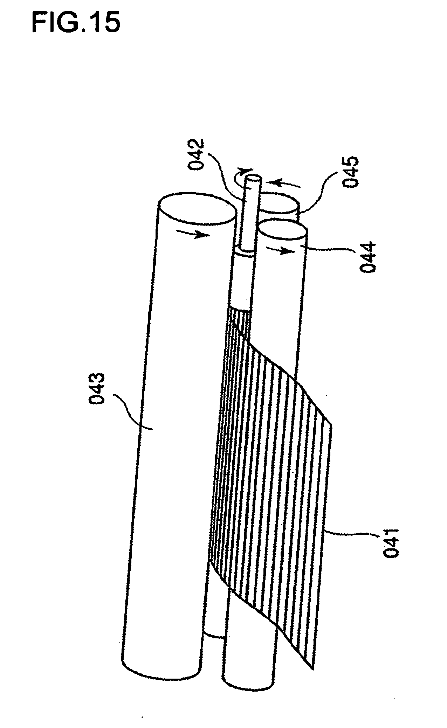

The winding of the prepreg sheets on the mandrel one layer by one layer or one set of layers by one set of layers while applying pressure to the layer or set of layers can be carried out by for example the device shown in FIG. 15. In FIG.15, the mandrel 042 is pinched and supported by three rolls 043, 044, and 055, and rotated by the rolls as shown in FIG.15.

The prepreg sheet 041 is inserted between the mandrel and rolls and wound on the mandrel while being applied pressure from the rolls starting from the innermost layer sequentially. In this way, prepreg sheets are wound one sheet by one sheet or one set of sheets by one set of sheets on the mandrel while receiving from the rolls to maintain wound state on the mandrel.

Then the mandrel with wound prepreg sheets is put into a heating furnace to be heat-hardened therein.

The knife cylinder body composed of a plurality of cylindrical CFRP layers having carbon fibers arranged to extend in different directions contacting closely each other can be produced in this way, thus a cylinder body high in flexural and torsional rigidity, light in weight, and low in rotatory inertia can be obtained.

The cylinder body can be produced in this method more easily as compared with the conventional method of producing a cylinder body in which carbon fibers immersed in liquid resin and impregnated with resin are directly wound on a mandrel.

By winding on the innermost layer orderly a first layer of pith type CFRP with carbon fiber inclination angle of 0° , a second layer of pitch type CFRP with carbon fiber inclination angle of +30° ~ +60° , and a third layer of pitch type CFRP with carbon fiber inclination angle of -30° ~ -60° , the knife cylinder having high flexural and tortional rigidity the same in both rotation direction can be easily obtained as mentioned above.

When covering the outer periphery of the knife cylinder body with a rubber lining layer, the cylinder body wound with the rubber lining layer is put into the heating furnace to vulcanize the rubber lining layer.

When covering with a CFRP lining layer, the mandrel with the CFRP lining layer wound on the outer periphery of the laminated prepreg layers may be put into the heating furnace to heat-harden the lining layer and the laminated prepreg layers together, or the lining layer may be wound on the heat-hardened laminated layers and then put into the heating furnace to heat-harden the lining layer.

In this way, the lining layer can be firmly fixed to the outer periphery of the laminated CFRP layers.

It is preferable to divide the lining layer in a plurality of lining layers along axial direction of the cylinder body. By this, effect of protection by the lining layers can be obtained with low cost, and formation of lining layers becomes easier by the division of the lining layer.

## BRIEF DESCRIPTION OF THE DRAWINGS

FIG.1a is a side elevation of a first embodiment of the upper knife cylinder of the invention, and FIG.1b is a cross-sectional view along line A-A.
FIG.2 is a cross-sectional view of the knife cylinder of the first embodiment of the invention.
FIG.3 is a graph showing a result of static destructive testing of the mounting part of the knife to the knife cylinder of the first embodiment of the invention.
FIG.4 is a cross-sectional view of the knife cylinder of a second embodiment of the invention.
FIG.5 is a cross-sectional view of the knife cylinder of a third embodiment of the invention.
FIG.6 is a cross-sectional view of the knife cylinder of a fourth embodiment of the invention.
FIG.7 is a side elevation of the knife cylinder of the fourth embodiment of the invention.
FIG.8 is a cross-sectional view of the knife cylinder of a fifth embodiment of the invention.

FIG.9 is perspective view of a knife mounting bracket showing a sixth embodiment of the invention.

FIG.10 is a cross-sectional view of the knife cylinder of a seventh embodiment of the invention.

FIG.11a is a side elevation of the knife cylinder of a seventh embodiment of the invention, and FIG.11b is a partial longitudinal section of knife cylinder of FIG.11a.

FIG.12 is an side elevation of the conventional rotary cutter.

FIG.13 is a right side view of the rotary cutter of FIG.1.

FIG.14 is a drawing for explaining the state of engagement of the upper and lower knife with each other.

FIG.15 is a perspective view of a CFRP layers or lining layers forming device.

**DETAILED DESCRIPTION OF THE PREFERRED EMBODIMENTS**

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

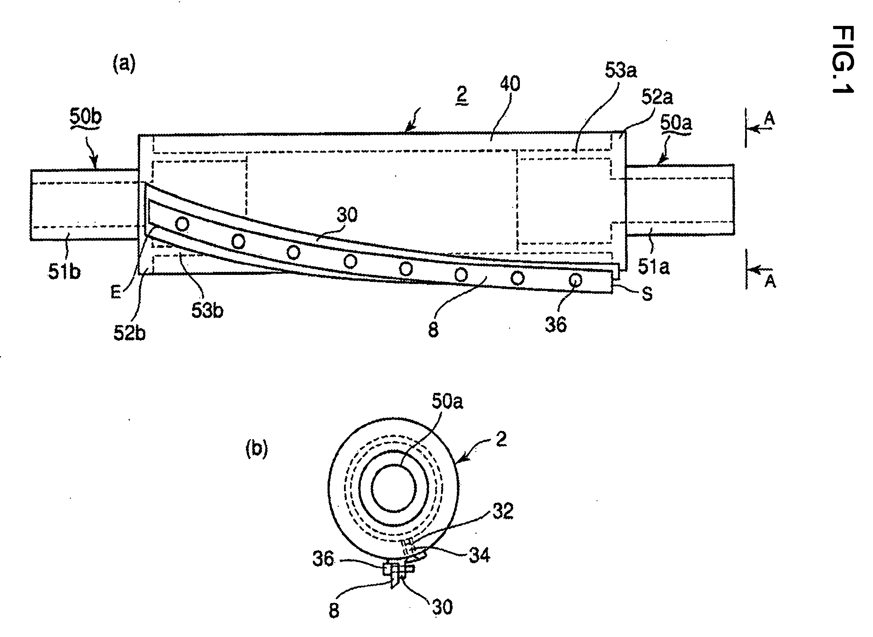

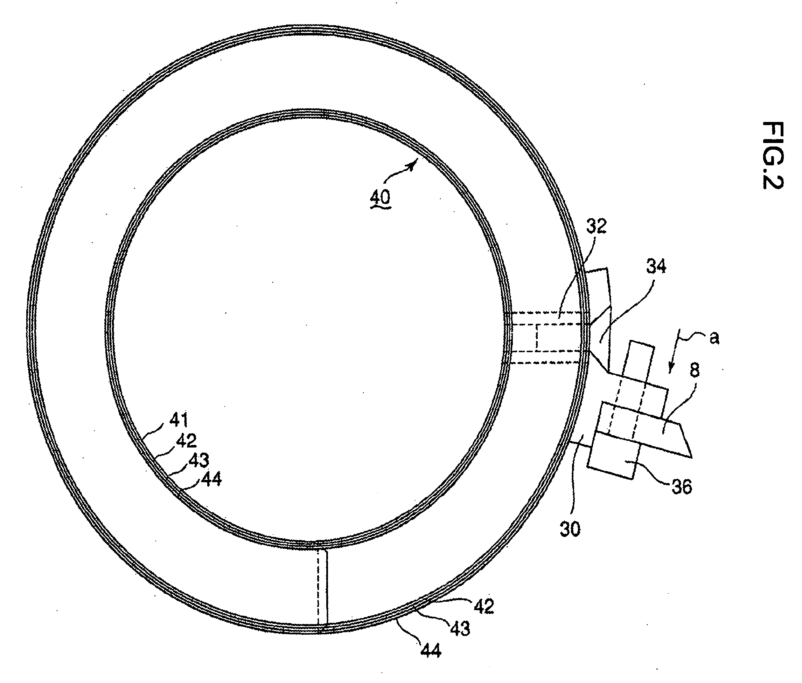

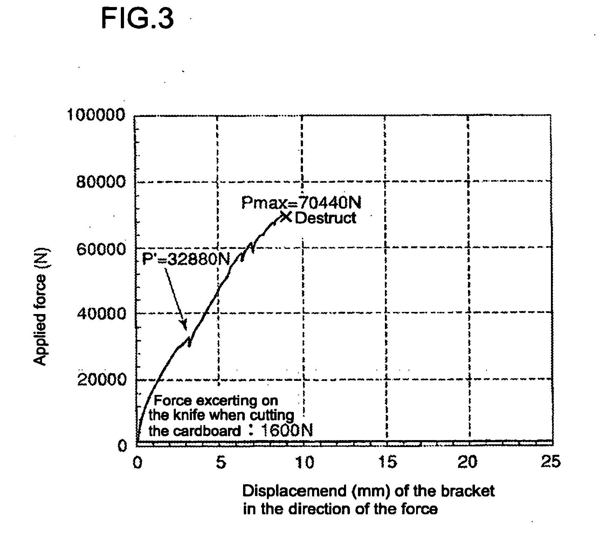

FIG.1a is a side elevation of a first embodiment of the upper knife cylinder of the invention, and FIG.1b is a cross-sectional view along line A-A. FIG.2 is a cross-sectional view of the knife cylinder of the first embodiment, and FIG.3 is a graph showing a result of static destructive testing of the mounting part of the knife to the knife cylinder of the first embodiment.

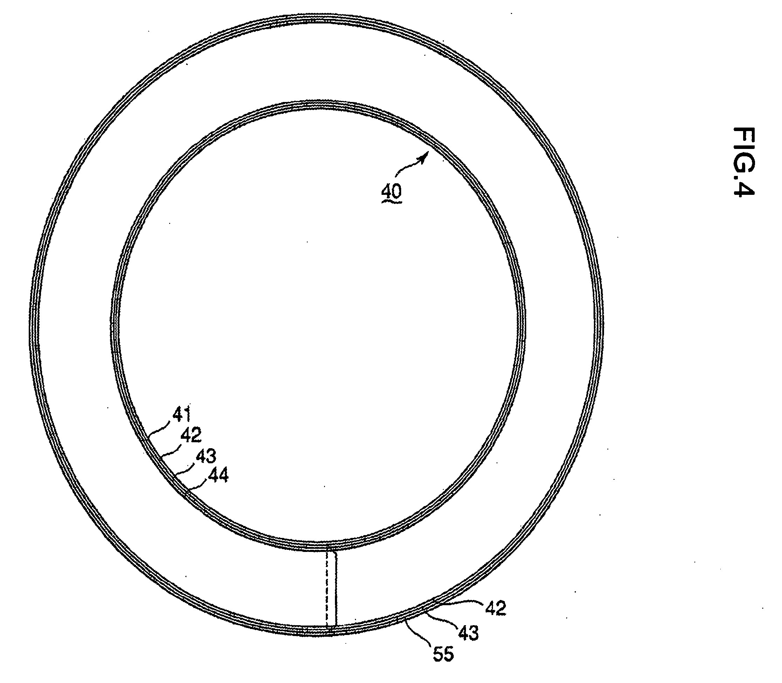

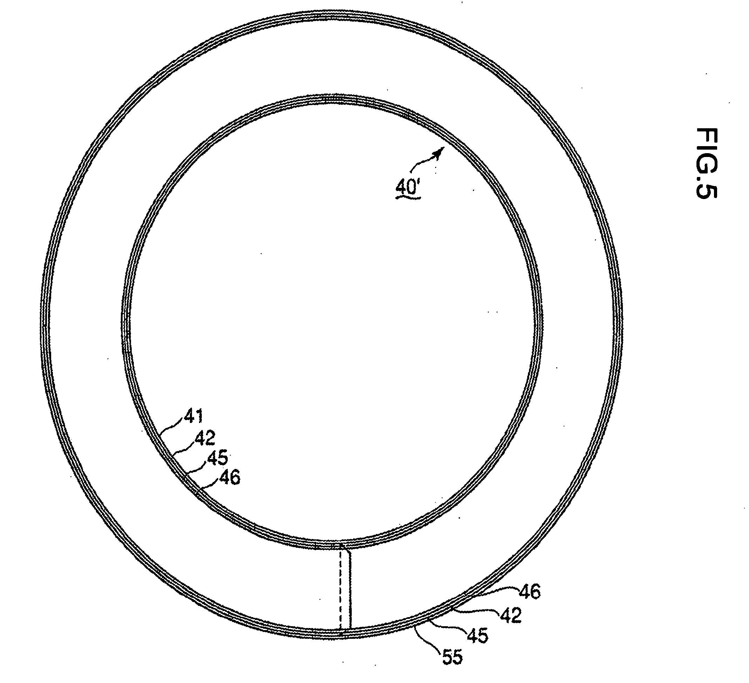

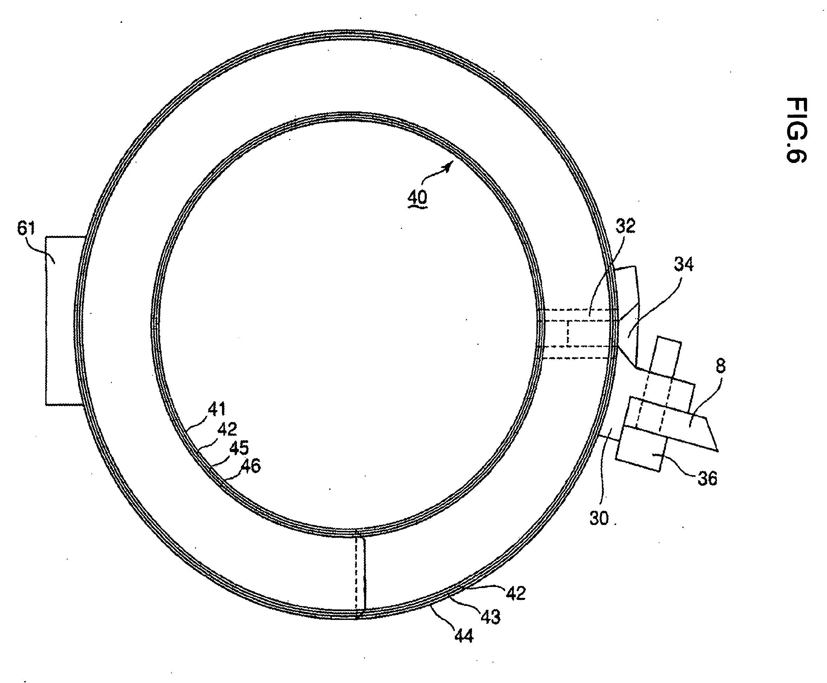

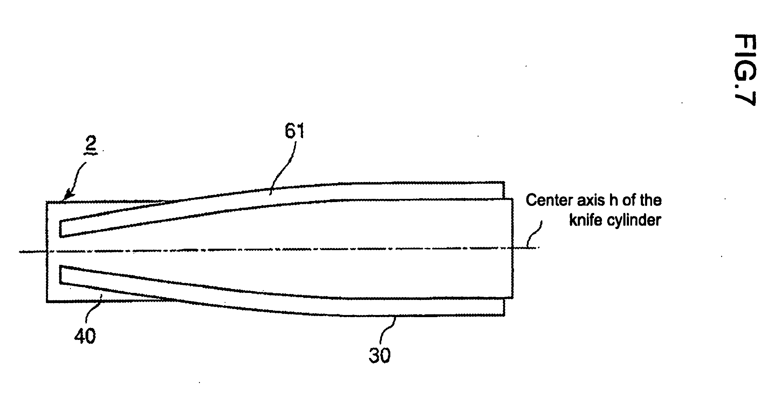

FIG.4 is a cross-sectional view of the knife cylinder of a second embodiment, FIG.5 is a cross-sectional view of the knife cylinder of a third embodiment, FIG.6 is a cross-sectional view of the knife cylinder of a fourth embodiment, FIG.7 is a side elevation of the knife cylinder of the fourth embodiment.

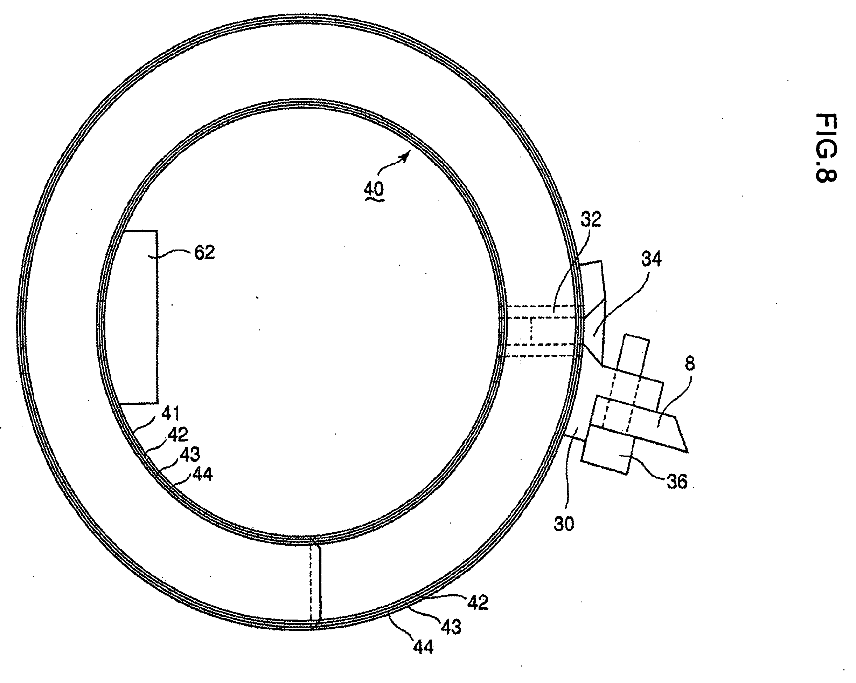

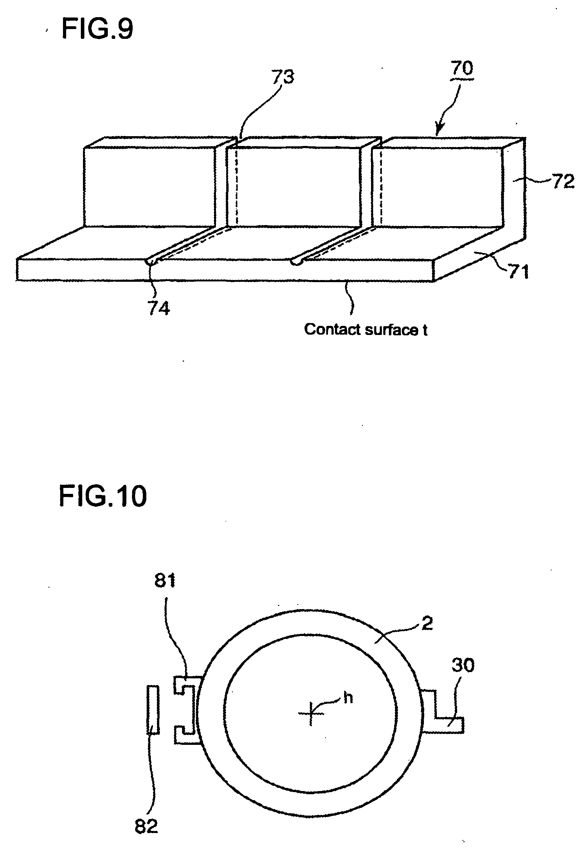

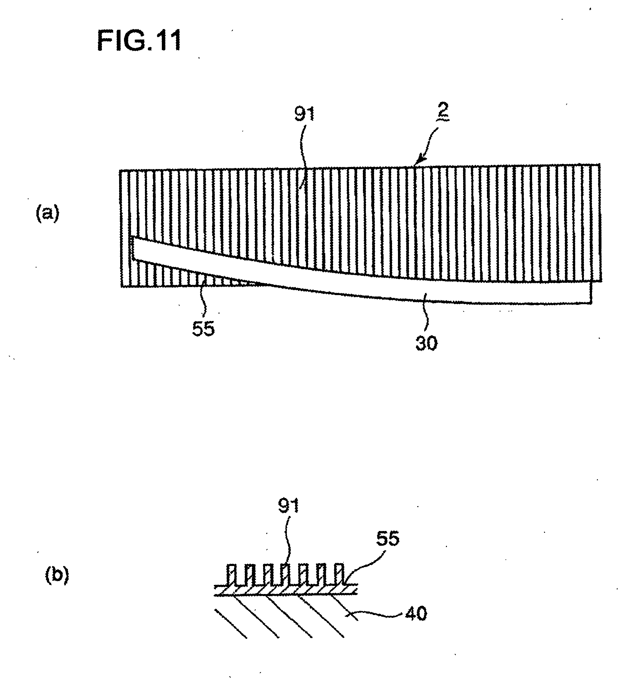

FIG.8 is a cross-sectional view of the knife cylinder of a fifth embodiment, FIG. 9 is perspective view of a knife mounting bracket showing a sixth embodiment of the invention, FIG.10a is a cross-sectional view of the knife cylinder of a seventh embodiment, FIG.11a is a side elevation of the knife cylinder of a seventh embodiment, and FIG.11b is a partial longitudinal section of knife cylinder of FIG.11a.

(The first embodiment)

Referring to FIGS.1 and 2 showing a first embodiment of the present invention, an upper knife cylinder 2 is composed as a laminated tube of CFRP layers 40, and steel bosses 50a and 50b fitted into the cylinder 2 at both ends thereof. The steel bosses 50a and 50b are for the knife cylinder 2 to be supported for rotation. Each of the bosses 50a and 50b has a cylindrical part 53a, 53b to be fitted into the hollow of the laminated tubular body 40, a flange part 52a, 52b to be brought into close contact with both end faces of the laminated tubular body 40, and a shaft part 51a, 51b extending outwardly.

A metal insert 32 is embedded in the outer part of the laminated tubular body 40, and a knife mounting bracket 30 is fixed on the outer periphery of the laminated tubular body to extend helically on the periphery thereof by means of fixing bolts 34 that are screwed into the metal inserts 30. The knife mounting bracket 30 is also glued onto the outer periphery of the laminated tubular body 40 with a thermosetting resin type adhesive such as epoxy resin. An upper knife 8 is fixed to the upper knife mounting bracket 30 by means of fixing bolts 36. A lower knife cylinder is not shown, it is composed similar to the upper knife cylinder 2 except that its knife mounting bracket is attached to extend symmetrically about the cylinder axis as can be seen in FIG.12.

The knife 8 is provided on the outer periphery of the knife cylinder to extend helically in order to cut a corrugated cardboard sheet straight across the advancing direction of the sheet starting from the right side end S of the knife 8 to end at the left side end E of the knife 8 as the sheet advances.

As shown in FIG.2, the laminated tube of CFRP layers 40 is composed such that the inner most layer 41 is of PAN type CFRP of which the fiber inclination angle is 90° which means the fibers extend circumferentially, the innermost layer 41 is overlapped sequentially with a layer 42 of pitch type CFRP of which the fiber inclination angle is 0° which means the fibers extend axially, a layer 43 of pitch type CFRP of which the fiber inclination angle is 45° , and a layer 44 of pitch type CFRP of which the fiber inclination angle is -45° . The inclination angle indicates an angle between the direction of extending fibers of CFRP and axial direction of the cylinder.

It is permissible that the order of lamination of CFRP layer 43 and CFRP layer 44 is reversed.

A plurality of the laminated bodies of three layers of 42, 43, and 44 is laminated in n layers. The laminated tube of CFRP layers 40 has a thickness of 25mm for example.

In the first embodiment, the upper knife cylinder 2 and the lower knife cylinder not shown in the drawings are composed of the laminated tubular body of CFRP layers 40.

The knife cylinder like this is produced by a device shown in FIG. 15. A sheet or a plurality of sheets of prepreg which has carbon fibers extending in one direction uniformly and impregnated with resin are wound on a mandrel 042 while applying pressure by means of rollers 034~045 provide around the mandrel 042 under normal temperature (18~25°C).

Then the mandrel 042 with the prepreg sheets being wound thereon is put in a heating furnace to heat-cure the resin, thereby forming on the outer periphery of the mandrel 042 a knife cylinder consisting of a plurality of CFRP layers with each of the layers firmly fixed each other. Then the knife cylinder is removed from the mandrel 042 by utilizing the difference in heat expansion coefficient between CFRP and the mandrel 042 which is made of metal and high compression strength of the most inner layer.

Prepreg sheets may be wound one by one sequentially or a set of three prepreg sheets to form the CFRP layers 42, 43, and 44 lapped one over the other may be wound one by one sequentially.

In the first embodiment, the ratio of the volume of the layer 42 of pitch type CFRP of which the fiber inclination angle is 0° to the total volume of the layers is determined so that the tensile elastic modulus of the knife cylinder is 240 GPa.

According to the first embodiment, as the innermost layer 41 of the knife cylinder is of PAN type CFRP with fiber inclination of 90°, i.e. carbon fibers extend in the circumferential direction, it is highly resistant to compression force in radial direction, has shape retaining property, and not easily crushed.

Therefore, when removing the laminated tubular body 40 from the mandrel 042 for forming the tube 40 or when removing the bosses 50a, 50b made of metal from the knife cylinder 2 by cooling the mandrel 042 or the bosses 50a, 50b and pulling them, the laminated tube or knife cylinder can resist the compression force due to thermal shrinkage of the resin impregnated in the carbon fibers and the tube or cylinder is prevented from crushing by the compression force because of high compression strength of PAN type carbon fiber of the innermost layer 41.

By virtue of the shape retaining property of the innermost layer and difference in thermal expansion between the mandrel or cylindrical parts 53a and 53b of the bosses 50a and 50b made of metal and the CFRP layers, a clearance is developed between the inner surface of the laminated tubular body 40 or knife cylinder and the outer surface of the mandrel or the cylindrical parts 53a and 53b, the mandrel or the bosses 50a and 50b can be easily removed when the mandrel with the laminated tubular body 40 or the knife cylinder is cooled.

Further, the knife cylinder 2 is composed of layers of pitch type CFRP of high strength except the innermost layer, and the volume ratio of the pitch type CFRP of fiber inclination angle of 0° to the total volume of the of the CFRP layers is determined so that tensile elastic modulus of the knife cylinder 2 is 240 GPa, and fiber inclination angles of the pitch type CFRP layer 43 and 44 is +45° and -45° respectively, so a knife cylinder of high flexural and torsional rigidity and light weight and small rotatory inertia can be obtained.

Therefore, vibration of the knife cylinder is reduces and development of clearance between the upper and lower knife edges is prevented when cutting the cardboard sheet, the sheet can be severed cleanly and accurately. Further, as the rotatory inertia of the knife cylinder is small, the capacity of the knife cylinder drive motors can be reduced and cutting speed of the sheet can be increased.

In the first embodiment, contracting effect of the resin impregnated the carbon fibers can be maximized by arranging the carbon fibers of the CFRP layer 43 and 44 in a direction of +45° and -45° to axial direction of the knife cylinder respectively, and the pitch type CFRP layers 42~44 contract to come in close contact with the innermost layer 41, as a result a firmly integrated laminated tubular body can be obtained.

By arranging the carbon fibers in the laminated CFRP layers 43 and 44 symmetrically about the center axis of the if the knife cylinder in a range of fiber inclination angle of $\pm30° \sim \pm60°$, torsional rigidity the same for both twist direction of the knife cylinder can be obtained.

In the first embodiment, if a PAN type CFRP layer of fiber inclination angle of 90° is superimposed between the pitch type CFRP layer 42 of fiber inclination angle of 0° and the pitch type CFRP layer 43 of fiber inclination angle of 45°, a laminated tubular body further increased in compression strength can be obtained.

Further, as the upper knife mounting bracket 30 is glued onto the laminated tubular body 40 with a thermosetting resin type adhesive (epoxy resin adhesive of average shearing strength of 10 MPa or higher) in addition to fixing the bracket by means of bolts 34, the knife mounting bracket 30 can be fixed firmly to the laminated tubular body 40.

As the knife cylinder is manufactured as previously described, the knife cylinder can be produced more easily as compared with conventional process of directly winding carbon fibers immersed in liquid resin to be impregnated with the resin on a mandrel for forming a cylinder.

Next, results of static destructive test and fatigue test of the attaching part of the knife mounting bracket to the knife cylinder will be explained.

(1) Result of static destructive test

A static load was applied to the knife mounting bracket 30 at the center in the longitudinal direction thereof in the direction indicated by an arrow a in FIG.2. A result of the test is shown in FIG.3. In FIG.3, the ordinate represents applied force (N) and abscissa represents displacement (mm) of the bracket in the direction of the force. As recognized from the graph, the attaching part of the knife mounting bracket to the knife cylinder was destructed at Pmax of 70440 N. The force exerting on the knife when cutting the cardboard is 1600 N, so the attaching part did not destructed at 20 times of the normal knife load of 1600 N.

(2) Fatigue test

A cyclic load was applied to the knife mounting bracket at the same position in the same direction as the static test under conditions as follows:

Temperature: room temperature (normal temperature)
Load: Pmax; 1000 N, Pmin; 100N
Amplitude: 450 N
Cycle frequency: 5Hz
Test machine: 10 ton fatigue tester of Shimazu Co. made.

Result of the test was that any crack or defect was not observed by a visual check.

(The second embodiment)

Next, a second embodiment of the invention will be explained referring to FIG.4. In the second embodiment, the outermost layer of the laminated tubular body 40 is formed of a glass fiber reinforced plastic (GFRP) layer or rubber layer 55 as a lining layer instead of the outermost GFRP layer 44 of the first embodiment. Other than this is the same as the first embodiment shown in FIG.2, the same constituents are indicated by the same reference numerals, and explanation for them is omitted.

As to the method of the lining layer 55, when rubber layer is formed as the lining layer, the rubber layer is wound on the outer periphery of a laminated tubular body of CFRP layers already heat-hardened, then the rubber layer is vulcanized by heating the laminated tubular body in a heating furnace.

When a GFRP layer is adopted as the lining layer, after the laminated tubular body of CFRP layers is formed using the winding device of FIG.15, the GFRP layer as the lining layer is wound on the tube body using the winding device in the same way as the CFRP layers are wound.

Then the mandrel wound with the CFRP layers and the GFRP layer is put in a heating furnace to heat-cure the prepreg of CFRP and GFRP layers concurrently. Then the laminated tubular body, i.e. knife cylinder body is drawn out to be removed from the mandrel.

The knife cylinder can be easily drawn out by virtue of the shape retaining property thereof and the difference in thermal expansion coefficient between CFRP and metal.

It is also suitable to wind the GFRP layer on a heat-hardened knife cylinder and then heat-harden in the heating furnace. In this case, the heat-hardened knife cylinder may be in a state it is wound on the mandrel or removed from the mandrel.

According to the second embodiment, as the laminated tubular body 40 is covered with the GFRP layer or rubber layer 55, the lining layer 55 protect the tube body 40 and the CFRP layers of the tube body are prevented from breakage or attrition, thus a knife cylinder resistant to breakage or attrition can be obtained. When the lining is a rubber lining layer, formation of the lining is relatively easy and cost is saved, and when the lining is a GFRP lining layer, effect of protection of the CFRP layers is conspicuous.

If the lining layer is divided into a plurality of lining layers in axial direction of the knife cylinder, formation of the lining layers is eased and cost is saved with effective protection performance. For example, it is suitable to provide linings at both end parts of the knife cylinder and at the portion where the knife mounting bracket is attached to the knife cylinder, where breakage or attrition of the CFRP lamination layers tends to occur.

(The third embodiment)

Next, a third embodiment of the invention will be explained referring to FIG.5. In the third embodiment, the laminated tubular body 40' composing the knife cylinder is composed such that the innermost layer 41 is a PAN type CFRP layer of fiber inclination angle of 90°, i.e. the carbon fibers are arranged along the circumferential direction of the knife cylinder, on which are overlaid sequentially a pitch type CFRP layer 42 of fiber inclination angle of 0°, i.e. the carbon fibers are arranged parallel to the axial direction of the knife cylinder, a PAN type CFRP layer 45 of fiber inclination angle of +45°, and a PAN type CFRP layer 46 of fiber inclination angle of -45°. A set of CFRP layers consisting of the layers 42, 45, and 46 is overlaid by n sets. The outermost layer is formed by a lining layer 55 of a GFRP layer or rubber layer as is in the second embodiment. The lining layer 55 is divided in a plurality of lining layers in axial direction of the knife cylinder.

According to the third embodiment, the CFRP layers 45 and 46 of fiber inclination angle of +45° and -45° respectively are of PAN type CFRP which is lower in tensile elastic modulus than pitch type CFRP and cheaper than pitch type CFRP, so cost of the knife cylinder can be saved. In this case, the ratio of volume of the pitch type CFRP layer 42 to the total volume of the CFRP layers is determined so that the tensile elastic modulus of the knife cylinder is 240 GPa.

By dividing the lining layer 55 in a plurality of lining layers in axial direction of the knife cylinder, formation of the lining layers is eased and effect of protection of the laminated tubular body 40' is attained.

(The fourth embodiment)

Next, a fourth embodiment of the invention will be explained referring to FIG.6. In the fourth embodiment, a counter flection member 61 for preventing occurrence of bending of the knife cylinder in increased temperature is attached to the outer periphery of the laminated tubular body 40 of the first embodiment. Other than this is the same as the first embodiment shown in FIG.2, the same constituents are indicated by the same reference numerals, and explanation for them is omitted.

The counter flection member 61 is made of material which has the same thermal expansion coefficient as the knife and the knife mounting bracket, for example steel material. The member 61 is attached to the outer periphery of the knife cylinder at a position symmetrical to the helically disposed knife 8 and knife mounting bracket 30 about the axis line of the knife cylinder, and the member 61 has a volume the same as the sum of the volume of the knife 8 and knife mounting bracket 30. An example of the shape and attached state of the counter flection member 61 is shown in FIG.7.

Temperature of the laminated tubular body of CFRP layer, knife 8 and knife mounting bracket 30 which are made of steel rises in cutting operation of the corrugated cardboard. As thermal expansion coefficient of steel is higher than CFRP, the knife cylinder 2 bends like a banana in a state the knife and bracket side outside. In the fourth embodiment, by attaching the counter flection member 61 to the outer periphery of the knife cylinder 2 symmetrically to the knife and knife mounting bracket about the axis line of the knife cylinder 2, the thermal expansion of the counter flection member 61 and that of the knife 8 and knife mounting bracket 30 cancel out each other, as a result bending of the knife cylinder can be prevented.

The counter flection member 61 may be attached to the outer periphery of the knife cylinder 2 in the same way as the knife mounting bracket 30 is attached thereto.

The counter flection member 61 may be divided into a plurality of members.

(The fifth embodiment)

Next, a fifth embodiment of the invention will be explained referring to FIG.8. In the fifth embodiment, a counter flection member 62 for preventing occurrence of bending of the knife cylinder in increased temperature is attached to the inner periphery of the laminated tubular body 40 of the first embodiment. The member 62 is attached to the inner periphery of the knife cylinder at a position symmetrical to the helically disposed knife 8 and knife mounting bracket 30 about the axis line of the knife cylinder, and the member 62 has a volume the same as the sum of the volume of the knife 8 and knife mounting bracket 30.

With this construction, also occurrence of bending of the knife cylinder 2 can be effectively prevented as in the case of the fourth embodiment. Further, by providing the counter flection member 62 inside the knife cylinder 2, external appearance of the knife cylinder is simplified.

(The sixth embodiment)

Next, a sixth embodiment of the invention will be explained referring to FIG.9. The embodiment relates to the construction of the knife mounting bracket (for example, the knife mounting bracket 30 shown in FIG.2). In FIG.9, a knife mounting bracket 70 of the embodiment has an attaching part 71 having a contact surface t to be contacted with the outer periphery of the knife cylinder and a knife mounting part 72 erecting from the attaching part 71. A plurality of slits 73 are formed at an equal spacing in longitudinal direction of the bracket, and on the attaching part 71 are formed grooves 74 of semi-circular cross section to continue to the slits 73 respectively.

The spacing between the slits is for example 100mm~200mm.

According to the sixth embodiment, by attaching the knife mounting bracket composed like this, deformation of the knife cylinder in axial direction due to thermal expansion of the knife 8 and knife mounting bracket 30 can be halved and bending of the knife cylinder 2 can be alleviated without providing the counter flection member 61 of the fourth embodiment. As the counter flection member 61 is not attached, rotatory inertia $GD^2$ does not increase, capacity of the drive motors can be decreased, and cost can be saved with simple construction.

According to the sixth embodiment, by devising such a knife mounting bracket, deformation of the knife cylinder in axial direction caused by the heat expansion of the knife and knife mounting bracket firmly fixed to the outer periphery of the knife cylinder is decreased, so bending of the knife cylinder in increased temperature is alleviated, and occurrence of trouble in the cardboard cutting operation can be prevented.

(The seventh embodiment)

Next, a seventh embodiment of the invention will be explained referring to FIG.10. In the seventh embodiment, a counter balance mounting bracket 81 is attached to the knife cylinder 2 on the outer periphery thereof at a position symmetrical to the knife mounting bracket 30 about the center axis h of the knife cylinder 2. A counter balance piece 82 is attached to the counter balance mounting bracket 81 detachably.

The sum of volume of the counter balance mounting bracket 81 and counter balance piece 82 is the same as the sum of volume of the knife 8 and knife mounting bracket 30, and thermal expansion coefficient of the counter balance mounting bracket 81 and counter balance piece 82 is the same as that of the knife 8 and knife mounting bracket 30.

With this construction, the counter balance mounting bracket 81 and counter balance piece 82 have the similar effect of preventing occurrence of bending of the knife cylinder in increased temperature similarly as the counter flection members 61 and 62 of the fourth and fifth embodiment have, and in addition, have effect of preventing vibration of the knife cylinder. As the weight of the counter balance piece 82 can be changed by replacing it by another counter balance of different weight, by selecting the counter balance piece 82, vibration of the knife cylinder can be effectively prevented.

As the counter balance piece 82 is detachable, it is possible to mount the counter balance only when it is necessary to prevent vibration of the knife cylinder.

(The eighth embodiment)

Next, an eighth embodiment of the invention will be explained referring to FIG.11. FIG.11a is a side elevation of the knife cylinder of a seventh embodiment of the invention, and FIG.11b is a partial longitudinal section of knife cylinder of FIG.11a. In FIGS.11a and 11b, the lining layer 55 is formed on the outer periphery of the knife cylinder 2 composed of the laminated tubular body 40 of CFRP layers, and fins 91 are provided to extend along the outer periphery of the lining 55 in circumferential direction at certain spacing.

The fins serve to increase cooling effect of the knife cylinder 2, and thermal expansion of the knife cylinder in axial direction can be effectively decreases. By this, thermal deformation of the knife cylinder is prevented, occurrence of clearance between the upper and lower knives attached to the upper and lower knife cylinders respectively can be prevented, and cutting performance of the cardboard sheet can be maintained.

It is suitable to form circumferential grooves (fin grooves) on the lining 55 to increase cooling effect of the knife cylinder, or to supply cooling air to the hollow of the knife cylinder.

According to the present invention, the cylinder body is consists of carbon fiber reinforced plastic layers and tensile elastic modulus in axial direction is 206 Gpa or higher, preferably 220 GPa or higher, so tensile strength and flexural rigidity of the knife cylinder is high. Therefore, the knife cylinder can be made thin-walled, and as CFRP is low in specific gravity, a knife cylinder of extremely low rotatory inertia can be obtained by synergy effect of thin-wall and low specific gravity.

The knife cylinder is composed such that; the innermost layer is of a layer of preferably PAN type CFRP of fiber inclination angle of 90° , (i.e. carbon fibers are arranged to extend in circumferential direction), on the innermost layer are overlaid sequentially a plurality of layers of pitch type CFRP of fiber inclination angle of +30° ~ +60° and -30° ~ -60° so that tensile elastic modulus of the knife cylinder in axial direction is higher than that of steel; so a knife cylinder of high flexural and tortional rigidity, low rotatory inertia, and high resistant property against compression load exerting inward with which good shape retaining property is obtained, can be realized.

In this way, by virtue of good shape retaining property to resist against inward exerting load is attained and difference in thermal expansion coefficient between CFRP layers and steel material of the mandrel for forming the cylinder and steel material of the bosses for supporting the cylinder, removing of the mandrel from the cylinder and removing of the bosses from the cylinder by cooling is eased.

Thus, a cylinder knife of high rigidity, highly resistant to damage, and of elongated operation life can be obtained, and increase of width of the knife cylinder and decrease of capacity of the drive motor are made possible.

Preferably by forming a lining on the outer periphery of the knife cylinder of CFRP, the lining serves to protect the CFRP layers and occurrence of damage or attrition can be prevented.

Further, preferably by attaching the counter flection member having the same thermal expansion coefficient as the knife mounting bracket attached on the outer periphery of the knife cylinder helically to the outer periphery or inner periphery of the knife cylinder so that the counter flection member is position symmetrical to the knife mounting bracket about the center axis of the knife cylinder, occurrence of flection of the knife cylinder due to difference of thermal expansion coefficient between CFRP layers and the knife mounting bracket made of steel and firmly fixed to the knife cylinder can be prevented.

By providing the counter flection member symmetrical to the knife mounting bracket about the center axis of the knife cylinder, the counter flection member functions as a counter weight to prevent or reduce vibration of the knife cylinder.

Further, according to the invention, by providing a cooling means to the knife cylinder, occurrence of flection of the knife cylinder in increased temperature can be prevented.

The rotary cutter of the invention is composed such that the knife cylinder is supported for rotation by hollow bosses attached to both ends of a laminated tubular body composed of laminated layers of CFRP by inserting the hollow cylindrical part of each of the bosses into the hollow of the laminated tubular body, so the knife cylinder is light in weight and low in rotarory inertia, thereby capacity of the drive motors can be decreased and cutting speed of the cardboard sheet can be increased.

**Claims**

1. A knife cylinder (2) with a knife attached helically on the outer periphery thereof, a hollow cylindrical body (40) cf the knife cylinder (2) comprising layers (41, ..., 44) of carbon fiber reinforced plastic, **characterized in that** the cylinder body (40) has tensile elastic modulus of 206 GPa or higher in axial direction thereof and **in that** 70% or larger in volume of carbon fibers composing the layers (41, ..., 44) of carbon fiber reinforced plastic are arranged to extend in axial direction, and tensile elastic modulus of the fiber is 590 GPa or higher.

2. A knife cylinder (2) according to claim 1, wherein an innermost layer (41) of the layers (41, ..., 44) is a carbon fiber reinforced plastic layer with carbon fibers arranged to extend in circumferential direction of the cylinder body (40), and on the innermost layer (41) are laminated a plurality of layers (42, 43, 44) of carbon fiber reinforced plastic with carbon fibers arranged to extend in axial direction of the cylinder body (40), arranged to extend in a range of inclination angle of +30°~ +60°, and arranged in a range of inclination angle of -30°~-60°to axial direction of the cylinder body (40).

3. A knife cylinder (2) according to claim 2, wherein the innermost layer (41) is of PAN type carbon fiber reinforced plastic.

4. A knife cylinder (2) according to claim 2, wherein fiber density of the carbon fiber reinforced plastic except the innermost layer (41) are 50% in volume or larger and carbon fibers thereof are pitch type carbon fibers.

5. A knife cylinder (2) according to claim 2, wherein a plurality of sets of layers each consisting of a first layer (42) of carbon fiber reinforced plastic with carbon fibers arranged to extend in axial direction of the cylinder body (40), a second layer (43) of carbon fiber reinforced plastic with carbon fibers arranged to extend in a range of inclination angle of +30°~ +60°to axial direction of the cylinder body (40), and a third layer (44) of carbon fiber reinforced plastic with carbon fibers arranged in a range of inclination angle of -30°~ -60°to axial direction of the cylinder body (40), are sequentially laminated on the innermost layer (41).

6. A knife cylinder (2) according to claim 5, wherein the fiber inclination angle of the second layer (43) of carbon fiber reinforced plastic is symmetrical to that of the third layer (44) of carbon fiber reinforced plastic about axial direction of the cylinder body (40).

7. A knife cylinder (2) according to claim 2, wherein the outer periphery of the knife cylinder (2) consisting of layers of carbon fiber reinforced plastic is covered by a lining layer (55) and wherein the lining layer is of rubber or glass fiber reinforced plastic.

8. A rotary cutter comprising a pair of knife cylinders (2) according to claim 1 each having a knife (8) attached helically to the outer periphery thereof for cutting a strip of cardboard sheet advancing between the knife cylinders (2), wherein a hollow cylindrical body (40) of the knife cylinder (2) is composed of laminated layers (41, ..., 44) of carbon fiber reinforced plastic and tensile elastic modulus thereof is 206 GPa or higher in axial direction thereof, bosses (50a, 50b) made of metal are attached to both ends of the cylinder body (40), each of the bosses (50a, 50b)has a cylindrical part (53a, 53b) to be fit into the hollow of the cylindrical body (40), a flange part (52a, 52b) to be brought into close contact with an end face of the cylindrical body (40), and a shaft part (51a, 51b) protruding from the flange part (52a, 52b), whereby the bosses (50a, 50b) made of metal are fixed to the cylinder body (40) by fitting the hollow cylindrical part (53a, 53b) of each of the bosses into the hollow of the cylinder body (40) from both ends thereof for the cylinder body (40) to be supported for rotation.

9. A rotary cutter according to claim 8, wherein a knife mounting bracket (30) to which the knife (8) is mounted is attached helically to the outer periphery of the cylinder body (40), and a counter flection member (61; 62) having thermal expansion coefficient the same to that of the knife mounting bracket (30) is attached to the cylinder body (40) on the outer periphery or inner periphery thereof so that the counter flection member is positioned symmetrically to the knife mounting bracket about the center axis of the cylinder body (40), and wherein the knife mounting bracket has one or more slits at a certain spacing along longitudinal direction of the bracket.

10. A rotary cutter according to claim 9, wherein volume of the counter flection member (61; 62) is the same as the sum of volume of the knife (8) and knife mounting bracket (30).

11. A rotary cutter according to claim 9, wherein the counter flection member consists of a bracket (81) for attaching detachably a piece member (82) and the piece member (82) attached to the bracket (81).

12. A rotary cutter according to claim 9, wherein a cooling means is provided to the cylinder body (40) and the cooling means is a plurality of fins or fin grooves (91) formed on the outer periphery of the cylinder body (40).

13. A rotary cutter according to claim 12, wherein the fins (91) are aluminium fins arranged parallel to circumferential direction of the cylinder body (40).

14. A method of attaching the knife mounting bracket to the cylinder body (40) in the rotary cutter of any one of claim 9-13, wherein the knife mounting bracket (30) is glued to the outer periphery of the cylinder body (40) with a thermosetting resin type adhesive.

**Patentansprüche**

1. Messerzylinder (2), an dessen Außenumfang ein Messer spiralförmig befestigt ist, wobei ein zylindrischer Hohlkörper (40) des Messerzylinders (2) Schichten (41, ....., 44) aus kohlenstofffaserverstärkten Kunststoff umfasst, **dadurch gekennzeichnet, dass** der Zylinderkörper (40) in seiner axialen Richtung ein Zugelastizitätsmodul von 206 GPa oder höher aufweist und dass Kohlenfasern mit einem Faservolumenanteil von 70% oder mehr, aus denen die Schichten (41, ....., 44) aus kohlenstofffaserverstärktem Kunststoff zusammengesetzt sind, so angeordnet sind, um sich in axialer Richtung zu erstrecken und das Zugelastizitätsmodul der Faser 590 GPa oder darüber beträgt.

2. Messerzylinder (2) nach Anspruch 1, wobei eine innerste Schicht (41) der Schichten (41, ....., 44) eine kohlenstofffaserverstärkte Kunststoffschicht ist, wobei Kohlenstofffasern so angeordnet sind, dass sie sich in Umfangsrichtung des Zylinderkörpers (40) erstrecken, und dass eine Vielzahl von Schichten (42, 43, 44) auf der innersten Schicht (41) aus kohlenstofffaserverstärktem Kunststoff auflaminiert sind, wobei Kohlenstofffasern so angeordnet sind, dass sie sich in axialer Richtung zu dem Zylinderkörper (40) erstrecken, so angeordnet sind, dass sie sich im Bereich eines Neigungswinkels von +30° ~ +60° erstrecken, und so angeordnet sind, dass sie sich im Bereich eines Neigungswinkels von -30° ~ -60° in axialer Richtung zu dem Zylinderkörper (40) erstrecken.

3. Messerzylinder (2) nach Anspruch 2, wobei die innerste Schicht (41) aus kohlenfaserstoffverstärktem Kunststoff des Typs PAN besteht.

4. Messerzylinder (2) nach Anspruch 2, wobei die Faserdichte des kohlenstofffaserverstärkten Kunststoffs mit Ausnahme der innersten Schicht (41) einen Faservolumenanteil von 50% oder mehr aufweist und Kohlenstofffasern daraus Kohlenstofffasern vom Pechtyp sind.

5. Messerzylinder (2) nach Anspruch 2, wobei eine Vielzahl von Verbundschichten, jeweils bestehend: aus einer ersten Schicht (42) aus kohlenfaserverstärktem Kunststoff mit Kohlenfasern, die so angeordnet sind, dass sie sich in axialer Richtung zu dem Zylinderkörper (40) erstrecken; aus einer zweiten Schicht (43) aus kohlenfaserverstärktem Kunststoff mit Kohlenfasern, die so angeordnet sind, dass sie sich im Bereich eines Neigungswinkels von +30° ~ +60° in axialer Richtung zu dem Zylinderkörper (40) erstrecken, und aus einer dritten Schicht (44) aus kohlenfaserverstärktem Kunststoff mit Kohlenfasern, die so angeordnet sind, dass sie sich in einem Neigungswinkelbereich von -30° ~ -60° in axialer Richtung zu dem Zylinderkörper (40) erstrecken, sequenziell auf die innerste Schicht (41) auflaminiert sind.

6. Messerzylinder (2) nach Anspruch 5, wobei der Faserneigungswinkel der zweiten Schicht (43) aus kohlenfaserverstärktem Kunststoff symmetrisch zu dem der dritten Schicht (44) aus kohlenfaserverstärktem Kunststoff zur axialen Richtung des Zylinderkörpers (40) ist.

7. Messerzylinder (2) nach Anspruch 2, wobei der Außenumfang des Messerzylinders (2) bestehend aus kohlenfaserverstärkten Kunststoffschichten mit einer Auskleidungsschicht (55) bedeckt ist und wobei die Auskleidungsschicht aus Gummi oder glasfaserverstärktem Kunststoff besteht.

8. Drehschneider, umfassend ein Paar von Messerzylindern (2) nach Anspruch 1, mit jeweils einem an ihrem Außenumfang spiralförmig befestigten Messer (8) zum Abtrennen von Streifen eines Kartonagebogens, welche sich zwischen den Messerzylindern (2) hindurchbewegen, wobei ein zylindrischer Hohlkörper (40) des Messerzylinders (2) aus laminierten Schichten (41, ....., 44) aus kohlenstofffaserverstärktem Kunststoff mit einem Zugelastizitätsmodul in seiner axialen Richtung von 206 GPa oder höher aufgebaut ist, wobei Warzen (50a, 50b) aus Metall an beiden Ende des Zylinderkörpers (40) befestigt sind und jede Warze (50a, 50b) einen zylindrischen Teil (53a, 53b) aufweist, um in die Höhlung des Zylinderkörpers (40) eingepasst zu werden, wobei ein Flanschabschnitt (52a, 52b) in engen Kontakt mit der Stirnfläche des Zylinderkörpers (40) zu bringen ist und ein Wellenabschnitt (51a, 51b) aus dem Flanschabschnitt (52a, 52b) hervorsteht, wobei die Warzen (50a, 50b) aus Metall **dadurch** an dem Zylinderkörper (40) befestigt sind, dass das zylindrische Hohlteil (53a, 53b) jeder Warze in die Höhlung des Zylinderkörpers (40) von seinen beiden Enden her eingepasst wird, um den Zylinderkörper (40) bei der Rotation zu stützen.

9. Drehschneider nach Anspruch 8, wobei eine Messer-Montagehalterung (30), an der das Messer (8) montiert ist, spiralförmig am Außenumfang des Zylinderkörpers (40) befestigt ist, und ein Gegendurchbiegungs-Element (61; 62) mit einem Wärmeausdehnungskoeffizienten, der dem der Messer-Montagehalterung (30) entspricht, am Außenumfang oder am Innenumfang des Zylinderkörpers (40) befestigt ist, so dass das Gegendurchbiegungs-Element symmetrisch zu der Messer-Montagehalterung um die Mittenachse des Zylinderkörpers (40) positioniert ist, und wobei die Messer-Montagehalterung einen oder mehrere Schlitze in bestimmten Intervallen entlang der Längsrichtung der Halterung aufweist.

10. Drehschneider nach Anspruch 9, wobei das Volumen des Gegendurchbiegungs-Elements (61; 62) der Summe des Volumens des Messers (8) und der Messer-Montagehalterung (30) entspricht.

11. Drehschneider nach Anspruch 9, wobei das Gegendurchbiegungs-Element aus einer Halterung (81) zum lösbaren Befestigen eines Stückelements (82) besteht und das Stückelement (82) an der Halterung (81) befestigt ist.

12. Drehschneider nach Anspruch 9, wobei an dem Zylinderkörper (40) eine Kühlvorrichtung vorgesehen ist und die Kühlvorrichtung aus einer Vielzahl von Rippen oder Rippennuten (91) besteht, die am Außenumfang des Zylinderkörpers ausgebildet sind.

13. Drehschneider nach Anspruch 12, wobei es sich bei den Rippen (91) um Aluminiumrippen handelt, die parallel zur Umfangsrichtung des Zylinderkörpers (40) angeordnet sind.

14. Verfahren zum Befestigen einer Messer-Montagehalterung an dem Zylinderkörper (40) bei dem Drehschneider nach einem der Ansprüche 9-13, wobei die Messer-Montagehalterung (30) mit einem hitzehärtbaren harzartigen Klebemittel auf den Außenumfang des Zylinderkörpers (40) aufgeklebt ist.

**Revendications**

1. Cylindre porte-couteau (2) avec un couteau fixé de manière hélicoïdale sur sa périphérie externe, un corps cylindrique creux (40) du cylindre porte-couteau (2) comprenant des couches (41, ..., 44) de plastique renforcé en fibres de carbone, **caractérisé en ce que** le corps de cylindre (40) a un module d'élasticité à la traction de 206 GPa ou plus dans sa direction axiale et **en ce que** 70% ou plus en volume de fibres de carbone composant les couches (41, ..., 44) de plastique renforcé en fibres de carbone sont agencés pour s'étendre dans la direction axiale, et le module d'élasticité à la traction de la fibre est de 590 GPa ou plus.

2. Cylindre porte-couteau (2) selon la revendication 1, dans lequel une couche située le plus à l'intérieur (41) des couches (41, ..., 44) est une couche de plastique renforcé en fibres de carbone avec les fibres de carbone agencées pour s'étendre dans la direction circonférentielle du corps de cylindre (40) et sur la couche située le plus à l'intérieur (41), on dépose en couche une pluralité de couches (42, 43, 44) de plastique renforcé en fibres de carbone avec les fibres de carbone agencées pour s'étendre dans la direction axiale du corps de cylindre (40), agencées pour s'étendre dans une plage d'angles d'inclinaison de +30° ~ +60°, et agencées dans une plage d'angles d'inclinaison de -30° ~ -60° vers la direction axiale du corps de cylindre (40).

3. Cylindre porte-couteau (2) selon la revendication 2, dans lequel la couche située le plus à l'intérieur (41) est du plastique renforcé en fibres de carbone de type PAN.

4. Cylindre porte-couteau (2) selon la revendication 2, dans lequel la densité de fibre du plastique renforcé en fibres de carbone excepté la couche située le plus à l'intérieur (41) est de 50% en volume ou plus et ses fibres de carbone sont des fibres de carbone de type à pas.

5. Cylindre porte-couteau (2) selon la revendication 2, dans lequel une pluralité d'ensembles de couches se composant chacun d'une première couche (42) de plastique renforcé en fibres de carbone avec des fibres de carbone agencées pour s'étendre dans la direction axiale du corps cylindrique (40), une deuxième couche (43) de plastique renforcé en fibres de carbone avec les fibres de carbone agencées pour s'étendre dans une plage d'angles d'inclinaison de +30° ~ +60° dans la direction axiale du corps de cylindre (40), et une troisième couche (44) de plastique renforcé en fibres de carbone avec les fibres de carbone agencées dans une plage d'angles d'inclinaison de -30° ~ -60° dans la direction axiale du corps de cylindre (40) sont déposées en couche de manière séquentielle sur la couche située le plus à l'intérieur (41).

6. Cylindre porte-couteau (2) selon la revendication 5, dans lequel l'angle d'inclinaison de fibre de la deuxième couche (43) de plastique renforcé en fibres de carbone est symétrique à celui de la troisième couche (44) de plastique renforcé en fibres de carbone autour de la direction axiale du corps cylindrique (40).

7. Cylindre porte-couteau (2) selon la revendication 2, dans lequel la périphérie externe du cylindre porte-couteau (2) se composant de couches de plastique renforcé en fibres de carbone est recouverte par une couche de revêtement (55) et dans lequel la couche de revêtement est du caoutchouc ou du plastique renforcé en fibres de carbone.

8. Coupeuse rotative comprenant une paire de cylindres porte-couteau (2) selon la revendication 1, ayant chacun un couteau (8) fixé de manière hélicoïdale sur sa périphérie externe pour couper une bande de feuille de carton avançant entre les cylindres porte-couteau (2), dans laquelle un corps cylindrique creux (40) du cylindre porte-couteau (2) est composé de couches (41, ..., 44) déposées en couche, de plastique renforcé en fibres de carbone et leur module d'élasticité à la traction est de 206 GPa ou plus dans leur direction axiale, des bossages (50a, 50b) réalisés à partir de métal sont fixés aux deux extrémités du corps de cylindre (40), chacun des bossages (50a, 50b) a une partie cylindrique (53a, 53b) destinée à être montée dans le creux du corps cylindrique (40), une partie de rebord (52a, 52b) destinée à être amenée en contact étroit avec une face d'extrémité du corps cylindrique (40), et une partie d'arbre (51 a, 51 b) faisant saillie de la partie de rebord (52a, 52b), moyennant quoi les bossages (50a, 50b) réalisés à partir de métal sont fixés sur le corps de cylindre (40) en montant la partie cylindrique creuse (53a, 53b) de chacun des bossages dans le creux du corps de cylindre (40) à partir de ses deux extrémités pour que le corps de cylindre (40) soit supporté en rotation.

9. Coupeuse rotative selon la revendication 8, dans laquelle un support de montage de couteau (30) sur lequel le couteau (8) est monté, est fixé de manière hélicoïdale sur la périphérie externe du corps de cylindre (40), et un élément de contre-flexion (61 ; 62) ayant un coefficient de dilatation thermique identique à celui du support de montage de couteau (30) est fixé sur le corps de cylindre (40) sur sa périphérie externe ou sa périphérie interne de sorte que l'élément de contre-flexion est positionné de manière symétrique au support de montage de couteau autour de l'axe central du corps de cylindre (40), et dans laquelle le support de montage de couteau a une ou plusieurs fentes à un certain espacement le long de la direction longitudinale du support.

10. Coupeuse rotative selon la revendication 9, dans laquelle le volume de l'élément de contre-flexion (61 ; 62) est le même que la somme du volume du couteau (8) et du support de montage de couteau (30).

11. Coupeuse rotative selon la revendication 9, dans laquelle l'élément de contre-flexion se compose d'un support (81) pour fixer de manière détachable un élément de pièce (82) et l'élément de pièce (82) étant fixé sur le support (81).

12. Coupeuse rotative selon la revendication 9, dans laquelle des moyens de refroidissement sont prévus sur le corps de cylindre (40) et les moyens de refroidissement sont une pluralité d'ailettes ou des rainures d'ailettes (91) formées sur la périphérie externe du corps de cylindre (40).

**13.** Coupeuse rotative selon la revendication 12, dans laquelle les ailettes (91) sont des ailettes en aluminium agencées parallèlement à la direction circonférentielle du corps de cylindre (40).

**14.** Procédé pour fixer le support de montage de couteau sur le corps de cylindre (40) dans la coupeuse rotative selon l'une quelconque des revendications 9 à 13, dans lequel le support de montage de couteau (30) est collé sur la périphérie externe du corps de cylindre (40) avec un adhésif de type à résine thermodurcissable.

## FIG.1

# FIG.2

# FIG.3

Applied force (N)

Pmax=70440N
✕ Destruct

P'=32880N

Force excerting on
the knife when cutting
the cardboard : 1600N

Displacemend (mm) of the bracket
in the direction of the force

FIG.4

FIG.5

## FIG.6

# FIG.7

Center axis h of the knife cylinder

61

2

30

40

# FIG.8

## FIG.9

Contact surface t

## FIG.10

# FIG.11

(a)

(b)

## FIG.12

## FIG.13

FIG.14

FIG.15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002284430 A
- JP 2527288 B

- JP 2002254383 A
- DE 19726993 A1